(19) Europäisches Patentamt
European Patent Office
Office européen des brevets

(11) Publication number : **0 675 166 A1**

# (12) EUROPEAN PATENT APPLICATION

(21) Application number : **95301136.8**

(51) Int. Cl.[6] : **C08L 71/12**

(22) Date of filing : **22.02.95**

(30) Priority : **31.03.94 JP 63022/94**

(43) Date of publication of application : **04.10.95 Bulletin 95/40**

(84) Designated Contracting States : **DE FR GB NL**

(71) Applicant : **SUMITOMO CHEMICAL COMPANY, LIMITED**
**5-33, Kitahama 4-chome**
**Chuo-ku**
**Osaka (JP)**

(72) Inventor : **Fujii, Takeshi**
**2848-19, Kubota**
**Sodegaura-shi, Chiba-ken (JP)**
Inventor : **Suzuki, Yasuro**
**5-9-14, Hatazawaminami**
**Kisarazu-shi, Chiba-ken (JP)**
Inventor : **Kihara, Hayato**
**5893-1-404, Goi**
**Ichihara-shi, Chiba-ken (JP)**
Inventor : **Anbo, Takashi**
**1-9, Yushudainishi**
**Ichihara-shi, Chiba-ken (JP)**

(74) Representative : **Cresswell, Thomas Anthony**
**J.A. Kemp & Co.**
**14 South Square**
**Gray's Inn**
**London WC1R 5LX (GB)**

## (54) Thermoplastic resin composition.

(57) A thermoplastic resin composition comprising :
(A) 1 to 99 % by weight of a polyphenylene ether resin,
(B) 99 to 1 % by weight of a polystyrene resin obtained by copolymerisation of a styrene compound, 100 to 500 ppm by weight of a compound containing a plurality of vinyl groups, and if necessary, a compound copolymerisable with the styrene compound, and/or a polystyrene resin obtained by copolymerisation of a styrene compound, 100 to 500 ppm by weight of a compound containing a plurality of vinyl groups, a rubber, and if necessary, a compound copolymerisable with the styrene compound, and having a weight average molecular weight of 150 thousand to 1 million and a number of branching points in a Z-average molecular weight of 2 to 20, and
(C) 0 to 100 parts by weight of a rubber per 100 parts by weight of the total amount of (A) and (B) [wherein, when (B) contains a rubber, said weight of (B) is the weight excluding the weight of said rubber].
According to the present invention, the thermoplastic resin composition having an excellent flowability and an excellent appearance of a molded article obtained can be provided.

EP 0 675 166 A1

## FIELD OF THE INVENTION

The present invention relates to a thermoplastic resin composition comprising a polyphenylene ether resin and a new polystyrene resin.

More particularly, the present invention relates to a thermoplastic resin composition having an equal mechanical property, an excellent flowability, and an excellent appearence of the molded article obtained as compared with those of a thermoplastic resin composition comprising a polyphenylene ether resin and a conventional polystyrene resin.

## BACKGROUND OF THE INVENTION

Hitherto, it has been well known to the person skilled in the art that a polyphenylene ether resin is a kind of thermoplastic material prepared by various methods from various phenols and has excellent physical properties such as dimensional stability and dielectric properties.

However, the uses of polyphenylene ether resin are restricted owing to its inferior processability, inferior impact strength, and inferior solvent stability.

Therefore, the blending of the polyphenylene ether resin with other polymers has been performed in order to improve processability, impact strength and solvent stability.

For example, a resin composition comprising the polyphenylene ether resin and one or more kinds of polystyrene resins is illustrated in the United States Patent NO. 3,383,435 by Cizec. A resin composition comprising the polyphenylene ether resin and a rubber-modified polystyrene is illustrated in the United States Patent NO. 3,819,761 by Lee.

However, these resin compositions were insufficient in flowability.

A polyphenylene ether resin composition comprising an impact resistant rubber-modified polystyrene and low molecular weight styrene homopolymer ( a number average molecular weight: 30 thousands to 60 thousands ) is illustrated in the United States Patent NO. 3,960,808 by Katchman.

However, although the flowability of said resin composition is improved, it has a problem that impact strength decreases.

Furthermore, when the conventional resin composition is molded, there is a problem that inferior appearences such as weld line and flow mark, break out and it is desired to solve the problem promptly in accordance with the shortening of molding cycle and the thinning of a molded article.

## SUMMARY OF THE INVENTION

From these circumstances, as the results of the present inventors' intensive researches and investigations on a resin composition comprising a polyphenylene ether resin, the present inventors have found that the resin composition comprising the polyphenylene ether resin and a new polystyrene resin kept an usual mechanical property and had an excellent flowability and an excellent appearence of its molded article, and attained the present invention.

Namely, the present invention relates to a thermoplastic resin composition comprising :

(A) 1 to 99 % by weight of a polyphenylene ether resin,

(B) 99 to 1 % by weight of a polystyrene resin obtained by copolymerization of a styrene compound, 100 to 500 ppm by weight of a compound containing plural numbers of vinyl groups, and if necessary, a compound being copolymerizable with the styrene compound, and/or a polystyrene resin obtained by copolymerization of a styrene compound, 100 to 500 ppm by weight of a compound containing plural numbers of vinyl groups, a rubber, and if necessary, a compound being copolymerizable with the styrene compound, and having a weight average molecular weight of 150 thousands to 1 million and a number of branching points in a Z-average molecular weight of 2 to 20, and

(C) 0 to 100 parts by weight of a rubber per 100 parts by weight of the total amount of (A) and (B) [wherein, when (B) contains the rubber, the weight of (B) is the weight excluded the weight of said rubber].

## DETAILED DESCRIPTION OF THE INVENTION

The polyphenylene ether resin (A) used in the present invention is a polymer or copolymer obtained by oxidative polymerization of one or more phenol compounds represented by the following formula (wherein, $R^1$, $R^2$, $R^3$, $R^4$, and $R^5$ each represents a hydrogen, a halogen atom, a hydrocarbon group or a substituted hydrocarbon group and at least one of them is a hydrogen) with oxygen or oxygen-containing gas using oxidative-coupling catalysts.

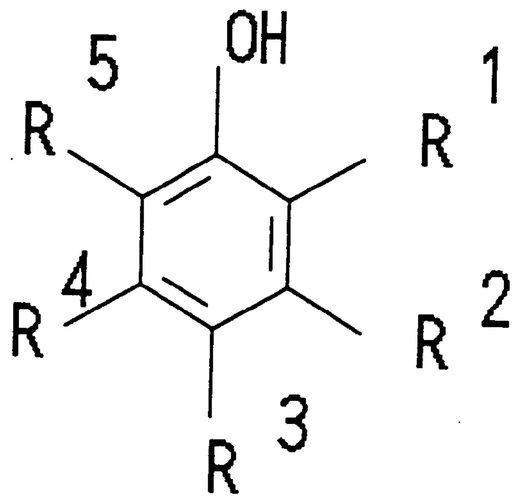

The examples of $R^1$, $R^2$, $R^3$, $R^4$, and $R^5$ in the above-mentioned formula include hydrogen, chlorine, bromine, fluorine, iodine, ethyl, n- or iso-propyl, pri-, sec-, or t-butyl, chloroethyl, hydroxyethyl, phenylethyl, benzyl, hydroxymethyl, carboxyethyl, methoxycarbonylethyl, cyanoethyl, phenyl, chlorophenyl, methylphenyl, dimethylphenyl, ethylphenyl and allyl.

The examples of the above-mentioned formula include phenol, o-, m-, or p-cresol, 2,6-, 2,5-, 2,4- or 3,5-dimethylphenol, 2-methyl-6-phenylphenol, 2,6-diphenylphenol, 2,6-diethylphenol, 2-methyl-6-ethylphenol, 2,3,5-, 2,3,6- or 2,4,6-trimethylphenol, 3-methyl-6-t-butylphenol, thymol and 2-methyl-6-allylphenol.

Furthermore, any of the phenol compounds of the above formula and other phenol compounds, for example, polyhydric hydroxy aromatic compounds such as bisphenol-A, tetrabromobisphenol-A, resorcin, hydroquinone and novolack resins may be used.

Preferable phenols among these compounds are 2,6-dimethylphenol, 2,6-diphenylphenol, 3-methyl-6-t-butylphenol and 2,3,6-trimethylphenol.

Any oxidative coupling catalyst may be employed for oxidative polymerization of phenol compounds, as long as it has a polymerization ability.

These preparing methods of the polyphenylene ether resin are illustrated in, for example, each of the specifications of the United State Patents NO. 3306874, NO. 3306875 and NO. 3257357, Japanese Examined Patent Publication (Koukoku) NO. 17880/1977 and Japanese Unexamined Patent Publications (Koukai) NO. 51197 / 1975 and (Koukai-Hei) NO. 304119 / 1989.

The examples of the polyphenylene ether resin (A) of the present invention include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), poly(2,6-butyl-1,4-phenylene ether), poly(2,6-dipropenyl-1,4-phenylene ether), poly(2,6-dilauryl-1,4-phenylene ether), poly(2,6-diphenyl-1,4-phenylene ether), poly(2,6-dimethoxy-1,4-phenylene ether), poly(2,6-diethoxy-1,4-phenylene ether), poly(2-methoxy-6-ethoxy-1,4-phenylene ether), poly-(2-ethyl-6-stearyloxy-1,4-phenylene ether), poly(2-methyl-6-phenyl-1,4-phenylene ether), poly(2-methyl-1,4-phenylene ether), poly(2-ethoxy-1,4-phenylene ether), poly(2-chloro-1,4-phenylene ether), poly(3-methyl-6-t-butyl-1,4-phenylene ether), poly(2,6-dichloro-1,4-phenylene ether), poly(2,5-dibromo-1,4-phenylene ether), poly(2,6-dibenzyl-1,4-phenylene ether) and coplymers of any of the phenol compounds of the above formula, and if necessary the other phenol compounds above-mentioned.

In copolymers, copolymers of 2,6-dimethylphenol and multi-substituted phenols such as 2,3,6-trimethylphenol and 2,3,5,6-tetramethylphenol, are included.

Among these polyphenylene ethers, poly(2,6-dimethyl-1,4-phenylene ether) and a copolymer of 2,6-dimethylphenol and 2,3,6-trimethylphenol are preferred.

The range of a molecular weight of the polyphenylene ether resin which can be used in the present invention cannot be specified indiscriminately because its suitable range differs owing to its use. Generally, the molecular weight represented by an intrinsic viscosity measured in chloroform at 30°C is 0.1 - 0.7 dl/g, preferably 0.4 - 0.6 dl/g, more preferably 0.45 - 0.6 dl/g.

The polyphenylene ether resin of the present invention includes modified copolymers grafted styrene monomer such as styrene, $\alpha$-methyl styrene, p-methylstyrene, vinyltoluene and chlorostyrene, onto the above-mentioned polymers and copolymers.

The polystyrene resin ( B ) used in the present invention is the polystyrene resin obtained by copolymerization of the styrene compound, 100 to 500 ppm by weight of the compound containing plural numbers of vinyl groups, and if necessary, the compound being copolymerizable with the styrene compound, and/or the polystyrene resin obtained by copolymerization of the styrene compound, 100 to 500 ppm by weight of the compound containing plural numbers of vinyl groups, the rubber, and if necessary, the compound being copolymerizable with the styrene compound, and having the weight average molecular weight of 150 thousands to 1 million and the number of branching points in the Z-average molecular weightof 2 to 20.

The polystyrene resin used in the present invention includes a so-called polystyrene resin ( GPPS ) a rubber-modified polystyrene ( HIPS ) and mixtures thereof.

The styrene compound as a monomer unit constituting the polystyrene resin includes, for example, α-substituted alkylstyrenes such as styrene and α-methylstyrene, and nuclearly substituted alkylstyrenes such as p-methylstyrene.

The compound containing plural numbers of vinyl groups as a monomer unit constituting the polystyrene resin in combination with the styrene compound at the polymerization includes, for example, a compound containing at least two vinyl groups.

The compound containing at least two vinyl groups includes, for example, aromaticdivinyl compounds such as divinylbenzene, and/or polyvalent acrylate.

Said polyvalent acrylate includes diacrylates such as polyethyleneglycol diacrylate, 1,3-butyleneglycol diacrylate, 1,6-hexaneglycol diacrylate, neopentylglycol diacrylate, polypropyleneglycol diacrylate, 2,2-bis-(4-acryloxypropyloxyphenyl)propane and 2,2-bis-(4-acryloxydiethoxyphenyl)propane; dimethacrylates such as ethyleneglycol dimethacrylate, diethyleneglycol dimethacrylate, triethyleneglycol dimethacrylate, polyethyleneglycol dimethacrylate, 1,3-butyleneglycol dimethacrylate, 1,4-butyleneglycol dimethacrylate, 1,6-hexaneglycol dimethacrylate, neopentylglycol dimethacrylate, dipropyleneglycol dimethacrylate, polypropyleneglycol dimethacrylate and 2,2-bis-(4-methacryloxydiethoxyphenyl)propane; triacrylates such as trimethylolpropane triacrylate and trimethylolethane triacrylate; trimethacrylates such as trimethylolpropane trimethacrylate and trimethylolethane trimethacrylate; tetraacrylates such as tetramethylolmethane tetraacrylate; tetramethacrylates such as tetramethylolmethane tetramethacrylate.

Among these, divinylbenzene and/or polyvalent acrylate are preferred.

And 100 to 500 ppm by weight, preferably 100 to 400 ppm by weight, more preferably 100 to 300 ppm by weight of the compound containing plural numbers of vinyl groups per 100 % by weight of the styrene compound are used.

When the compound containing plural numbers of vinyl groups is less than 100 ppm by weight, the polystyrene resin having the number of branching points in the Z-average molecular weight specified in the present invention is hardly obtained and when it exceeds 500 ppm by weight, a flowability and an appearence of a molded article become inferior.

As the rubber in the polystyrene resin, for example, polybutadiene, styrenebutadiene copolymer rubber and ethylene-propylene-non-conjugated diene terpolymer rubber are used, and particularly, polybutadiene and styrenebutadiene copolymer rubber are preferred.

As polybutadiene, for example, both high cis-polybutadiene containing high cis-contents and low cis-polybutadiene containing low cis-contents can be used.

The blending amount of the rubber is generally 1 to 50 parts by weight per 100 parts by weight of the styrene compound.

Besides, together with said styrene compound and said compound containing plural numbers of vinyl groups, the compound being copolymerizable with the styrene compound, for example, vinyl monomers such as acrylonitrile, methacrylonitrile, methacrylic acid and methylmethacrylate, and furthermore, maleic anhydride, maleimide and nuclearly substituted maleimide may be used.

The blending amount of the compound being copolymerizable with the styrene compound is generally 0 to 150 parts by weight per 100 parts by weight of the styrene compound.

A weight average molecular weight of said polystyrene resin used in the present invention is 150 thousands to 1 million, preferably 150 thousands to 600 thousands, more preferably 150 thousands to 380 thousands. When the weight average molecular weight is less than 150 thousands, a property desired is not obtained, and when it exceeds 1 million, the flowability decreases remarkably.

The weight average molecular weight of the present invention is a value determined by a differential refractometer in a gel permeation chromatograph (GPC) and it was determined as follows.

About 0.5 g of the polystyrene resin was dissolved in methylethyl ketone (MEK) / methanol CMeOH) mixed solvent (MEK/MeOH =10/1 by volume). Then, a soluble part and an insoluble part (the rubber component of the rubber-modified polystyrene resin) were separated by a centrifugal separation and after a supernatant liquid except the insoluble part was taken out by decantation, said supernatant liquid was poured in 500 ml of

methanol under stirring and a polymer part is precipitated. Then polymer part was filtered by a glass filter (GS25) and methanol was removed by drying.

Thus obtained dried sample was dissolved in tetrahydrofuran at the concentration of 0.5 g/ml to make a solution for measurement.

The weight average molecular weight of the polystyrene resin was determined by GPC using said solution.

Then, the weight average molecular weight by GPC was calculated by a working curve obtained from a standard polystyrene having a specified molecular weight.

The number of branching points in the Z-average molecular weight of the said polystyrene resin used in the present invention is 2 to 20, preferably 2 to 15, more preferably 3 to 10.

If the said number of branching points is less than 2, the flowability is inferior, while, if it exceeds 20, both the flowability and the appearence of the molded article become poor.

It is considered that the number of branching points in the Z-average molecular weight may be corresponding to the number of branching points in a molecular chain representing the higher molecular weight fraction which is considered to lower the flowability of a polystyrene resin having a given molecular weight distribution and is determined by the following procedure.

The number of branching points in the Z-average molecular weight was determined by the viscosity-GPC method using a gel permeation chromatograph (GPC) equipped with a differential refractometer and a viscometer as detectors.

A detailed description of the measurement of the number of branching points is illustrated in Journal of the Rubber Industry Society, Japan, Vol. 45, No. 2. PP. 105 - 118 (1972).

Besides, a kind of the solvent and its concentration for measurement were the same as in the measurement of the weight average molecular weight above-mentioned.

The number of branching points of a certain molecular weight M ( Bn(M) ) was calculated by the following equation;

$$[IV(M) / IV_L(M)]^{2/3} = [(1 + Bn(M)/7)^{1/2} + 4/9 \cdot Bn(M)]^{-1/2}$$

wherein, IV (M) and $IV_L$ (M) were respectively the intrinsic viscosity of the test sample and a linear polystyrene as a standard sample measured by the viscosity-GPC method.

The said number of branching points in the Z-average molecular weight is the value in the Z-average molecular weight obtained from the numbers of branching points at each molecular weight determined by the viscocity-GPC method.

A melt flow rate of the polystyrene resin used in the present invention is preferably 0.1 to 50 g/10 min.

The polystyrene resin used in the present invention can be produced, for example, by a batchwise suspension polymerization process or a continuous bulk polymerization process, where it is better that the styrene compound and the compound containing plural numbers of vinyl groups are homogeneously mixed beforehand and the said mixture of solution is polymerized until the conversion rate of preferably 60 % by weight or more, more preferably 70 % by weight or more.

And both a thermal polymerization method and a polymerization method by a radical initiator can be used, and any of various radical initiators can be used as the initiator for polymerization.

The polymerization reactor may be a thorough-mixing type polymerization vessel with a stirrer, a plug-flow type flooded (vertical or horizontal) polymerization vessel, a static-mixing tube type polymerization vessel or a combination of those vessels may be mentioned.

Besides, the polystyrene resin used in the present invention includes the rubber-modified polystyrene as mentioned before. The rubber-modified polystyrene can be produced, for example, by a bulk polymerization process or a bulk-suspension polymerization process .

In case of the bulk polymerization process, for example, a solution dissolving 1 to 50 parts by weight of the rubber in 100 parts by weight of the styrene compound, or a solution adding toluene and/or ethylbenzene as diluents to said solution, is supplied continuously to the thorough-mixing type polymerization vessel with a stirrer, and then, polymerized until the conversion of preferably 20 to 50 % by weight, more preferably 25 to 45 % by weight (1st step), and continually, said polymer mixture is sent to a connected polymerization vessel.

Successively, after 100 to 500 ppm of the compound containing plural numbers of vinyl groups per 100 % by weight of the styrene compound is homogeneously mixed, the polymerization is conducted until the final conversion rate reaches preferably at least 60 % by weight, more preferably at least 70 % by weight (2nd step).

Of course, said compound containing plural numbers of vinyl groups may be added to the polymerization solution not in 2nd step, but in 1st step, or in both steps.

However, the preparing methods of the rubber-modified polystyrene are not restricted to these methods.

The particle diameter of the rubber in the rubber-modified polystyrene is preferably 0.1 to 10 μm, more preferably 0.2 to 5 μm.

The rubber (C) used in the present invention improves an impact strength of the composition. The rubber

means natural and synthetic polymer materials which are elastic at room temperature, and includes, for example, ethylene- α-olefin copolymer rubbers such as ethylene-propylene copolymer rubber and ethylene-1-butene copolymer rubber: ethylene-α-olefin-non-conjugated diene copolymer rubbers such as ethylene-propylene-non-conjugated diene copolymer rubber; polybutadiene; polyurethane rubber; styrene-butadiene copolymer rubber; styrene block copolymer rubbers, for example, block copolymer rubbers having styrene block (S) and butadiene block (Bd) such as SBd block copolymer, SBdS block copolymer and SBdSBdS block copolymer, a block copolymer rubber having styrene block (S) and hydrogenated butadiene block (Bd'), a block copolymer rubber having styrene block (S) and isoprene block (I) and a block copolymer rubber having styrene block (S) and hydrogenated isoprene block (I').

The rubber may be mixtures thereof, or modified rubbers which are modified with a functional monomer containing acid or epoxy.

Among these, at least one kind of the rubber selected from polybutadiene, styrene-butadiene copolymer rubber and the styrne block copolymer rubber is preferred.

Among the styrene block copolymer rubbers, the block copolymer rubber having styrene block (S) and butadiene block (Bd) and the block copolymer rubber having styrene block (S) and hydrogenated butadiene block (Bd') are preferred.

As a preparing method of the styrne block copolymer rubber, many methods are proposed and as a representative method, for example, there may be mentioned a method to obtain the block copolymer rubber having styrene block (S) and butadiene block (Bd) by block copolymerization using lithium catalyst or Ziegler catalyst in an inert solvent [ refer to Japanese Examined Patent Publication ( Koukoku ) No. 2798 / 1965 ].

As this block copolymer, there may be mentioned, for example, CARIFLEX [ Trade mark ] TR1101 sold by Shell Chemical Company Ltd. in the U.S.A.

The hydrogenation treatment of these block copolymer rubbers are performed, for example, in the presence of a hydrogenation catalyst in an inert solvent [ refer to Japanese Examined Patent Publications (Koukoku) No. 8704 / 1967, No. 6636 / 1968 and No. 20814 / 1971 ].

This hydrogenation rate is preferably at least 50 %, more preferably 80 % or more of butadiene block (Bd), and preferably 25 % or less of styrene block (S).

As these partially or perfectly hydrogenated block copolymer, there may be mentioned, for example, KRATON-G [ Trade mark ] sold by Shell Chemical Company Ltd. in the U.S.A.

As the styrene block copolymer rubber, a number average molecular weight of the styrene block copolymer rubber is preferably 10,000 to 1,000,000, more preferably 20,000 to 300,000.

The number average molecular weight of styrene block (S) in the block copolymer rubber is preferably 1,000 to 200,000, more preferably 2,000 to 100,000 and the number average molecular weight of butadiene block (Bd) is preferably 1,000 to 200,000, more preferably 2,000 to 100,000 and the weight ratio of the styrene block (S) to butadiene block (Bd) [ (S)/(Bd) ] is preferably 2/98 to 60/40, more preferably 10/90 to 40/60.

When the styrene block copolymer rubber is the block copolymer having styrene block (S) and hydrogenated butadiene block (Bd') copolymer rubber, a number average molecular weight of the styrene block (S) is preferably 1,000 to 200,000, more preferably 2,000 to 100,000 and a number average molecular weight of the hydrogenated butadiene block (Bd') is preferably 1,000 to 200,000, more preferably 2,000 to 100,000, and the weight ratio of the styrene block (S) to hydrogenated butadiene block (Bd') [ (S)/(Bd') ] is preferably 2/98 to 60/40. more preferably 10/90 to 40/60.

In the thermoplastic resin composition of the present invention, the polyphenylene ether resin is blended as 1 to 99 % by weight, preferably 10 to 90 % by weight, more preferably 20 to 80 % by weight and the polystyrene resin is blended as 99 to 1 % by weight, preferably 90 to 10 % by weight, more preferably 80 to 20 % by weight.

If the blending amount of the polyphenylene ether resin is less than 1 % by weight, the thermal resistance is not adequate, and if it exceeds 99 % by weight, the flowability is inferior.

Besides, when the rubber-modified polystyrene is used as the polystyrene resin (B), the rubber (C) includes the weight of the rubber in said rubber-modified polystyrene as the weight of the rubber (C).

The 0 to 100 parts by weight, preferably 0 to 60 parts by weight, more preferably 0 to 30 parts by weight of the rubber (C) is contained per 100 parts by weight of the sum of the polyphenylene ether resin (A) and the polystyrene resin (B) [wherein, when (B) is the rubber-modified polystyrene, the weight of the polystyrene resin (B) is the weight excluded the weight of said rubber in it].

If the rubber exceeds 100 parts by weight, the thermal resistance and the rigidity are not adequate.

Other polymer compounds and assistant agents may be able to be added to the thermoplastic resin composition of the present invention.

As other polymer compounds, for example, a linear polystyrene having no branching; polyolefins such as polypropylene, high density polyethylene, low density polyethylene, linear low density polyethylene, propylene-ethylene copolymer, ethylene-1-butene copolymer, ethylene-,-pentene copolymer, ethylene-1-hexene copolymer and poly-4-methyl-1-pentene; copolymers of olefin and vinyl compound copolymerizable with olefin [for example, acrylates, methacrylates, vinyl acetate, styrene, acrylonitrile and glycidyl (metha)acrylate]; polymers such as polyvinylchloride, polymethylmethacrylate, polyvinylacetate, polyvinylpyridine, polyvinylcarbazole, polyacrylamide and polyacrylonitrile; condensation polymer compounds such as polycarbonate, polysulfone, polyethersulfone, polyethylene terephtharate, polybutylene terephtharate, polyarylene ester (for example, U polymer manufactured by Unitika Company Ltd. ), polyphenylene sulfide, polyamides such as 6-nylon, 6,6-nylon and 12-nylon, and polyacetal; furthermore, various resins such as silicone resin, fluorine resin, polyimide, polyamideimide, phenol resin, alkid resin, unsaturated polyester resin and Dapon resin; are mentioned.

Besides, to the thermoplastic resin composition of the present invention, a filler may be added.

As the filler, for example, fibers for reinforcement such as glass fiber, carbon fiber, aramide fiber, aluminium and stainless steel, and metal whisker; inorganic fillers such as silica, alumina, calcium carbonate, talc, mica, clay, kaolinite, magnesium sulfate, carbon black, $TiO_2$ and ZnO; are mentioned.

Fillers such as carbon fiber, metal fiber and carbon black decrease a surface resistivity and volume resistivity, and can give electroconductivity to the thermoplastic resin composition.

Besides, to the thermoplastic resin composition of the present invention, flame retardants and flame retarding assistants such as halogen compounds, phosphoric esters (for example, triphenylphosphate ) and $Sb_2O_3$; mineral oils; other lubricants; plasticizers such as phthalate; dyes; pigments; antistatic agents; antioxidant agents; and weather-resistant agents; can be added.

The preparing method of the thermoplastic resin composition of the present invention is not restricted particularly, and for example, various methods such as solution-blending method and melt-kneading method are mentioned. Among these, melt-kneading method is preferred.

When melt-kneading method is applied, the temperature of melt-kneading is selected usually from the range of 150 to 400 °C, preferably 200 to 350 °C, more preferably 200 to 300 °C.

When melt-kneading method is applied, any orders of kneading of each component are used.

For example, when mixtures are melt-kneaded by using an extruder, there may be any one of methods wherein the components (A) - (C) are added all at once and melt-kneaded; a method wherein the component (A) and the component (B) are melt-kneaded in advance and the component (C) is added additionally and melt-kneaded; a method wherein the component (A) and the component (C) are melt-kneaded in advance and the component (B) is added additionaly and melt-kneaded; or a method wherein the component (B) and the component (C) are melt-kneaded in advance and the component (A) is added additionaly and melt-kneaded.

As uses of the thermoplastic resin composition of the present invention, for example, various cases, frames, connectors, switches, and other mechanism parts in electric ·electronics ·OA fields; door-mirror stays, lamp reflectors, various gears in automobile ·vehicle fields; and various housings, pulleys, handles in mechanical fields; are mentioned.

## EXAMPLE

The present invention is illustrated in detail according to the Examples as follows but the present invention is not restricted by these Examples.

The meanings of abbreviated words which appear in the Examples and Comparative Examples are shown as follows.

(1) PPE 1: Poly(2,6-dimethyl-1,4-phenylene ether)

Its intrinsic viscosity measured in chloroform at 30 °C was 0.46 dl/g.

(2) B-PS-1: Polystyrene resin

A mixture of 95 % by weight of styrene, 5 % by weight of ethylbenzene and 200 ppm by weight of divinylbenzene was sent in liquid to a thorough-mixing type polymerization vessel with a stirrer, and was polymerized until the conversion rate of 65 % by weight at a polymerization temperature of 150 °C. After that, unreacted monomer was removed in a degassing vessel at 250°C and the polystyrene resin ( B-PS-1 ) was obtained.

| | |
|---|---|
| Weight average molecular weight | $35 \times 10^4$ |
| The number of branching points in the Z-average molecular weight | 3.4 |
| Melt flow rate ( g/10 min. ) | 3.2 |

( Measurement condition: 200°C. 5 kg loading, according to JIS K 7210 )

(3) B-PS-2: Rubber-modified polystyrene

A mixture comprising 5.5 % by weight of middle-cis-polybutadiene ( Diene 55 AS manufactured by Asahi Kasei Company Ltd. ), 90 % by weight of styrene, 4 % by weight of ethylbenzene, 0.5 % by weight of mineral oil, 0.03 % by weight of t-dodecylmercaptan and 340 ppm by weight of divinylbenzene was sent in liquid to a thorough-mixing type polymerization vessel with a stirrer and was polymerized until the conversion rate of 30 % by weight at a polymerization temperature of 140 °C under thestirring speed of 150rpm.

Successively, thus obtained mixture was polymerized at 140 to 160°C in a flooded type polymerization vessel until the conversion rate of 75 % by weight, and after that, volatile matter was eliminated in a degassing vessel at 250 °C, and the rubber-modified polystyrene ( B- PS-2 ) was obtained.

| | |
|---|---|
| Weight average molecular weight | 23.5 $\times 10^4$ |
| The number of branching points in the Z-average moclecular weight | 5.6 |
| A final rubber amount | 7.3 wt.% |
| The particle diameter of the rubber (weight average) | 0.7 μm |
| Melt flow rate ( g/10 min. ) | 4.7 |

( Measurement condition: 200°C, 5 kg loading, according to JIS K 7210 )

(4) B-PS-3: Polystyrene resin

A mixture was polymerized by the same manner as in B-PS-1 except that, instead of 200 ppm by weight, 700 ppm by weight of divinylbenzene was used and the polystyrene resin (B-PS-3) was obtained.

| | |
|---|---|
| Weight average molecular weight | 110$\times 10^4$ |
| The number of branching points in the Z-average moclecular weight | 25.0 |
| Melt flow rate ( g/10 min. ) | 0.2 |

( Measurement condition: 200°C, 5 kg loading, according to JIS K 7210 )

(5) GPPS-1: Polystyrene resin

Esbrite [ Trade mark ] E197N manufactured by Sumitomo Chemical Company Ltd.

| | |
|---|---|
| Weight average molecular weight | 35 $\times 10^4$ |
| The number of branching in the Z-average molecular weight | 0 |
| Melt flow rate ( g/10 min. ) | 1.5 |

( Measurement condition: 200°C, 5 kg loading, according to JIS K 7210 )

(6) GPPS-2: Polystyrene resin

Esbrite [ Trade mark ] E163N manufactured by Sumitomo Chemical Company Ltd.

| | |
|---|---|
| Weight average molecular weight | 21 $\times 10^4$ |
| The number of branching points in the Z-average moclecular weight | 0 |
| Melt flow rate ( g/10 min. ) | 6.8 |

( Measurement condition: 200°C, 5 kg loading, according to JIS K 7210 )

(7) HIPS-1: Rubber-modified polystyrene

A mixture was polymerized by the same manner as in B-PS-2 except that 0.01 % by weight of t-dodecylmercaptan and no divinylbenzene were used and the rubber-modified polystyrene (HIPS-1) was obtained.

| | |
|---|---|
| Weight average molecular weight | 20.5 $\times 10^4$ |
| The number of branching points in the Z-average molecular weight | 0 |
| A final rubber amount. | 7.3 wt.% |
| The particle diameter of the rubber (weight average) | 0.7 μm |
| Melt flow rate ( g/10 min. ) | 3.5 |

( Measurement condition: 200°C, 5 kg loading, according to JIS K 7210 )

(8) SBS-1: Styrene-butadiene-styrene (SBdS) block copolymer rubber

CARIFLEX [ Trade mark ] TR 1101 manufactured by Shell Chemical Company Ltd.

Besides, the measurement methods of properties are illustrated as follow.

(1) Izod impact strength and flexural modulus

The components shown in Table 1 were blended, and pellets prepared by melt-kneading with twin-screw kneader were injection molded to obtain test pieces of 3.2 mm in thickness. Izod impact strength and flexural modulus were measured respectively in acordance with ASIM D256 and D790 by using said test pieces.

(2) Melt flow rate (MFR)

MFR was measured at 280°C, 10 kg loading in accordance with JIS K 7210.

(3) Appearence of molded article

Flat plates with 90 mm × 150mm × 2mmt were obtained by injection molding at a cylinder temperature of 260°C and their appearences were evaluated by eyes.

Excellent : Surface with smoothness and brilliance.
Good : Surface with smoothness and slightly inferiority in brilliance as compared with Excellent.
Common : Surface with inferiority in smoothness and brilliance as compared with Good.
Bad : Surface with inferiority in smoothness and no brilliance.

Example 1

The thermoplastic resin composition was prepared by melt-kneading 50 parts by weight of the PPE 1 and 50 parts by weight of the B-PS-1 thrown from a hopper into a continuous twin-screw kneader ( TEX-44 type manufactured by Nippon Steel Works Company Ltd. ) settled at a cylinder temperature of 260 °C and screw revolution numbers of 330 rpm. Thus obtained composition was molded at 260°C by injection molding, and test pieces were prepared and their properties and appearences were evaluated.

The blend ratio and the measurement results of properties were shown respectively in Table 1 and Table 2.

Comparative Example 1

The composition was prepared by the same manner as in Example 1 except that, instead of the B-PS-1, the GPPS-1 was used, and test pieces were made and evaluated.

The blend ratio and the measurement results of properties were shown respectively in Table 1 and Table 2.

Comparative Example 2

The composition was prepared by the same manner as in Example 1 except that, instead of the B-PS-1, the GPPS-2 was used, and test pieces were made and evaluated.

The blend ratio and the measurement results of properties were shown respectively in Table 1 and Table 2.

Comparative Example 3

The composition was prepared by the same manner as in Example 1 except that, instead of the B-PS-1, the B-PS-3 was used, and test pieces were made and evaluated.

The blend ratio and the measurement results of properties were shown respectively in Table 1 and Table

2.

Example 2

The composition was prepared by the same manner as in Example 1 except that, furthermore, 10 parts by weight of the SBS-1 was added, and test pieces were made and evaluated.

The blend ratio and the measurement results of properties were shown respectively in Table 1 and Table 2.

Comparative Example 4

The composition was prepared by the same manner as in Example 2 except that, instead of the B-PS-1, the GPPS-1 was used, and test pieces were made and evaluated.

The blend ratio and the measurement results of properties were shown respectively in Table 1 and Table 2.

Example 3

The composition was prepared by the same manner as in Example 1 except that, instead of the B-PS-1, the B-PS-2 was used, and test pieces were made and evaluated.

The blend ratio and the measurement results of properties were shown respectively in Table 1 and Table 2.

Comparative Example 5

The composition was prepared by the same manner as in Example 3 except that, instead of the B-PS-2, the HIPS-1 was used, and test pieces were made and evaluated.

The blend ratio and the measurement results of properties were shown respectively in Table 1 and Table 2.

[Table 1]

| | Blend ratio ( parts by weight ) | | | | | | | |
|---|---|---|---|---|---|---|---|---|
| | PPE 1 | B-PS-1 | B-PS-2 | B-PS-3 | GPPS-1 | GPPS-2 | HIPS-1 | SBS-1 |
| Example 1 | 50 | 50 | - | - | - | - | - | - |
| Comparative Example 1 | 50 | - | - | - | 50 | - | - | - |
| Comparative Example 2 | 50 | - | - | - | - | 50 | - | - |
| Comparative Example 3 | 50 | - | - | 50 | - | - | - | - |
| Example 2 | 50 | 50 | - | - | - | - | - | 10 |
| Comparative Example 4 | 50 | - | - | - | 50 | - | - | 10 |
| Example 3 | 50 | - | 50 | - | - | - | - | - |
| Comparative Example 5 | 50 | - | - | - | - | - | 50 | - |

[Table 2]

| | Flexural modulus ( $kg/cm^2$ ) | Izod impact strength ( kg · cm / cm ) | MFR ( g / 10 min. ) | Appearence of molded articles |
|---|---|---|---|---|
| Example 1 | 34,000 | 3.0 | 32 | Excellent |
| Comparative Example 1 | 34,000 | 2.5 | 25 | Common |
| Comparative Example 2 | 34,000 | 1.9 | 31 | Bad |
| Comparative Example 3 | 34,000 | 1.2 | 4 | Bad |
| Example 2 | 24,000 | 10 | 28 | Excellent |
| Comparative Example 4 | 24,000 | 10 | 22 | Common |
| Example 3 | 26,000 | 7 | 35 | Excellent |
| Comparative Example 5 | 26,000 | 7 | 25 | Common |

## Claims

1. A thermoplastic resin composition comprising:
(A) 1 to 99% by weight of a polyphenylene ether resin,
(B) 99 to 1 % by weight of a polystyrene resin obtained by copolymerisation of a styrene compound, 100 to 500 ppm by weight of a compound containing a plurality of vinyl groups, and optionally, a compound copolymerisable with the styrene compound, and/or polystyrene resin obtained by copolymerisation of a styrene compound, 100 to 500 ppm by weight of a compound containing a plurality of vinyl groups, a rubber, and optionally, a compound copolymerisable with the styrene compound, and having a weight average molecular weight of 150 thousand to 1 million and a number of branching points in a Z-average molecular weight of 2 to 20, and
(C) 0 to 100 parts by weight of a rubber per 100 parts by weight of the total amount of (A) and (B) [wherein, when (B) contains a rubber, said weight of (B) is the weight excluding the weight of said rubber].

2. A thermoplastic resin composition according to claim 1, wherein the polyphenylene ether resin is poly (2,6-dimethyl-1,4-phenylene ether) or a copolymer of 2,6-dimethylphenol and 2,3,6-trimethylphenol.

3. A thermoplastic resin composition according to claim 1 or 2 wherein the polyphenylene ether resin has an intrinsic viscosity measured in chloroform at 30°C of 0.45-0.6 dl/g.

4. A thermoplastic resin composition according to claim 1, wherein the polystyrene resin is a polystyrene resin obtained by copolymerisation of a styrene compound, 100 to 300 ppm by weight of a compound containing a plurality of vinyl groups, and optionally a compound copolymerisable with the styrene compound, and/or a polystyrene resin obtained by copolymerisation of the styrene compound, 100 to 300 ppm by weight of a compound containing a plurality of vinyl groups, a rubber, and optionally a compound copolymerisable with the styrene compound, and has a weight average molecular weight of 150 thousand to 600 thousand and a number of branching points in the Z-average molecular weight of 2 to 15.

5. A thermoplastic resin composition according to any one of the preceding claims, wherein the compound containing a plurality of vinyl groups is divinylbenzene and/or polyvalent acrylate.

6. A thermoplastic resin composition according to any one of the preceding claims, wherein the number of branching points in the Z-average molecular weight is 3 to 10.

7. A thermoplastic resin composition according to any one of the preceding claims, wherein the rubber (C) is at least one of polybutadiene, a styrene-butadiene copolymer rubber and a styrene block copolymer rubber.

8. A thermoplastic resin composition according to claim 7, wherein the styrene block copolymer rubber is a block copolymer rubber having styrene block (S) and butadiene block (Bd).

9. A thermoplastic resin composition according to claim 8, wherein the styrene block (S) has a number average molecular weight of 2, 000 to 100,000, the butadiene block (Bd) has a number average molecular weight of 2,000 to 100,000, and the weight ratio of (S)/(Bd) is 10/90 to 40/60.

10. A thermoplastic resin composition according to claim 7, wherein the styrene block copolymer rubber is a block copolymer rubber having styrene block (S) and hydrogenated butadiene block (Bd).

11. A thermoplastic resin composition according to claim 10, wherein the styrene block (S) has a number average molecular weight of 2,000 to 100,000, the hydrogenated butadiene block (Bd') has a number average molecular weight of 2,000 to 100,000, and the weight ratio of (S)/(Bd') is 10/90 to 40/60.

European Patent Office

# EUROPEAN SEARCH REPORT

Application Number
EP 95 30 1136

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 305 764 (BORG WARNER CHEMICALS INC) * page 4, line 49 - page 5, line 6; claim 19; examples * | 1-11 | C08L71/12 |
| X | EP-A-0 476 366 (GENERAL ELECTRIC COMPANY ) * page 4, line 38 - line 48; claim 1; example * | 1-11 | |
| X | EP-A-0 530 535 (BASF AG) * page 3, line 36 - line 57; claims * | 1-5,7-11 | |

TECHNICAL FIELDS SEARCHED (Int.Cl.6)
C08L

The present search report has been drawn up for all claims

| Place of search | Date of completion of the search | Examiner |
|---|---|---|
| BERLIN | 7 July 1995 | Boeker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)